# EUROPEAN PATENT APPLICATION

(11) **EP 4 286 266 A1**
(43) Date of publication of application: **06.12.2023**
(21) Application number: 21965809.3
(22) Date of filing: 26.11.2021
(51) Int. Cl.: B63B 35/00, H02S 20/00

(54) **FLOATING MODULE FOR PHOTOVOLTAIC PANELS**

(30) Priority: 23.11.2021 RU 2021134040
(71) Applicant: Heliorec SAS, 44000 Nantes (FR)
(72) Inventor: VASILENKO, Polina Igorevna, Moscow, 127224 (RU); GMYZOV, Aleksandr Vladimirovich, Izhevsk, 426057 (RU)
(74) Representative: Cabinet Chaillot
(86) International application number: PCT/RU2021/000525
(87) International publication number: WO 2023/096521

(57) **Abstract**

This invention relates to the production of renewable energy, namely to devices such as floating solar power plants, and in particular to a floating module on which a photovoltaic panel is placed, which ensures the basing of this structure on the water surface. These floating modules with a photovoltaic panel will be used to assemble the power plant. The floating module for photovoltaic panels contains a hollow base, hollow support elements located on the base with the formation of a single internal cavity with the base, a photovoltaic panel located on the support elements at an angle to the horizon. A hollow ballast tank is installed in the internal cavity of the base, made with holes for filling with water, and an insert of foam material is installed on top of the tank in the internal cavity of the base. The lower side of the foam insert and, accordingly, the upper side of the ballast tank are located along the water line of the floating module. The use of the claimed technical solution makes it possible to increase the stability of a floating module with photovoltaic panels on reservoirs when exposed to waves, and also allows you to increase the strength of the product.

## Description

### The field of technology to which the invention relates

The present invention relates to the production of renewable energy, namely to devices such as floating solar power plants, and in particular to a floating module on which a photovoltaic panel is placed, which ensures the basing of this structure on the water surface. These floating modules with a photovoltaic panel will be used to assemble the power plant.

### State of the art

In the document (WO 2012139998, N011.31/042, publ. 18.10.2012), a floating structure is disclosed, which in itself is a solar panel mount. The device for supporting a photovoltaic panel consists of a sealed plastic shell forming a lower wall, an upper wall and four sidewalls. The device contains a means for attaching a photovoltaic panel to the specified upper wall of the plastic shell.

The disadvantage of this analogue is the lack of a water ballast system in the floating module. A water ballast system is required to increase the stability of the floating module, for use in waves or with water level changes and in windy conditions.

In addition, known from the state of the art is the supporting structure for photovoltaic panels, US 20170201206 A1, B63B 35/44, publ. 14.08.2018. A load-bearing structure for photovoltaic generation on water is provided. The supporting structure includes at least one floating bracket. The floating bracket includes a floating platform and a plurality of support elements provided on the upper surface of the floating platform, a ventilation space is provided between at least two adjacent support elements, whereby a plurality of support elements is configured to secure a panel of photovoltaic cells. The lower surface of the panel of photovoltaic cells is separated from the upper surface of the floating platform.

The system is much more complex structurally and consists of several parts, whereas the HelioRec system consists of a single floating module that supports a photovoltaic panel, which allows you to build power plants of different geometries and produce a quick assembly.

A support device for a photovoltaic panel is known from the state of the art. (CN103597737 A, publ. 19.02. 2014). The support device for supporting the photovoltaic panel consists of a sealed plastic shell formed by bottom wall, top wall and four sidewalls. The device contains a means for attaching a photovoltaic panel to the specified upper wall of the specified plastic shell.

A floating photovoltaic system is also known from the state of the art. (W/O2018157704 A1, publ. 07.09.2018). A floating photovoltaic system contains a box floating on the surface of the water. A frameless photovoltaic unit located motionless on the upper surface of the floating box. The photovoltaic unit is motionlessly located on the ledge of the floating box and is held by restrictive elements motionlessly located on the upper surface of the floating box and distributed along the perimeter of the photovoltaic unit.

The disadvantage of this analogue is the lack of a water ballast system in the floating module. A water ballast system is required to increase the stability of the floating module, for use in waves or with water level changes and in windy conditions.

### Disclosure of the essence of the invention

The objective of the claimed technical solution is to create a floating module to support photovoltaic panels and a floating solar power plant from the mentioned modules, with the possibility of installation on the water surface and with the ability to withstand loads associated with waves of sea amplitude, water level drop and wind, as well as the objective of the claimed solution is to create floating modules that provide ease of transportation.

The technical result of the claimed invention is to increase the stability of a floating module with photovoltaic panels on reservoirs when exposed to waves and wind, and also consists in increasing the strength of the product.

The claimed technical result is achieved due to the fact that the floating module for photovoltaic panels contains: a hollow base, hollow support elements located on the base with the formation of a single internal cavity with the base, a photovoltaic panel located on the support elements at an angle to the horizon, while a hollow ballast tank is installed in the inner cavity of the base, made with holes for filling with water, and an insert of foamed material is installed on top of the tank in the inner cavity of the base, and the lower side of the insert of foamed material and, accordingly, the upper side of the ballast tank is located along the water line of the floating module.

In the particular case of the implementation of the claimed technical solution, the foam insert is made of a density of 20 to 35 kg/m³.

In the particular case of the implementation of the claimed technical solution, an insert made of foamed material is made of foamed polystyrene or of foamed polyethylene or polyurethane.

In the particular case of the implementation of the claimed technical solution, the ballast tank is made of a complex shape that repeats the internal shape of the base of the floating module, while the lower part of the ballast tank is made in a shape that repeats the shape of the floating module in its upper part.

In the particular case of the implementation of the claimed technical solution, the photovoltaic panel is located at an angle of 12 or 17 or 22 or 27 or 32 degrees to the horizon.

In the particular case of the implementation of the claimed technical solution, hollow support elements are located on the base with the provision of ventilation space between each other and with the provision of a ventilation gap between the upper wall of the base and the backside of the photovoltaic panel.

In the particular case of the implementation of the claimed technical solution, the module is executed with the possibility of connecting to at least one similar module to form a system of floating modules, with photovoltaic panels located on each floating module connected by electric cables to the power plant, while the power plant contains service and additional tracks connected to the said at least one module.

In the particular case of the implementation of the claimed technical solution, the connection of the said tracks with each other or the connection of the said tracks with at least one module and /or the connection of the modules with each other is made by means of hinged joints fixed with a screw, with the possibility of rotating the swivel joint around the axis of the screw on the structural fastening element made on the side walls of the module and the said tracks.

In the particular case of the implementation of the claimed technical solution, a through hole is made in each screw along the central axis, while a steel cable is laid through the hole connecting the mentioned tracks and modules, while the ends of the cable are rigidly connected to the anchor lines.

In the particular case of the implementation of the claimed technical solution, the upper surface of the tracks is made with stiffening ribs.

In the particular case of the implementation of the claimed technical solution, the tracks are made with a grooved upper surface.

In the particular case of the implementation of the claimed technical solution, the floating module is made of recycled secondary raw materials or is made from a mixture of primary and secondary raw materials or from primary raw materials, while the raw materials are polyethylene terephthalate, low-pressure polyethylene, high-pressure polyethylene, polypropylene.

In the particular case of the implementation of the claimed technical solution, the tracks are made of recycled secondary raw materials or made from a mixture of primary and secondary raw materials, or from primary raw materials, while the raw materials are polyethylene terephthalate, low-pressure polyethylene, high-pressure polyethylene, polypropylene.

### A brief description of the drawings

Details, features, as well as advantages of the present invention follow from the following description of the options for implementing the claimed technical solution using drawings that show:

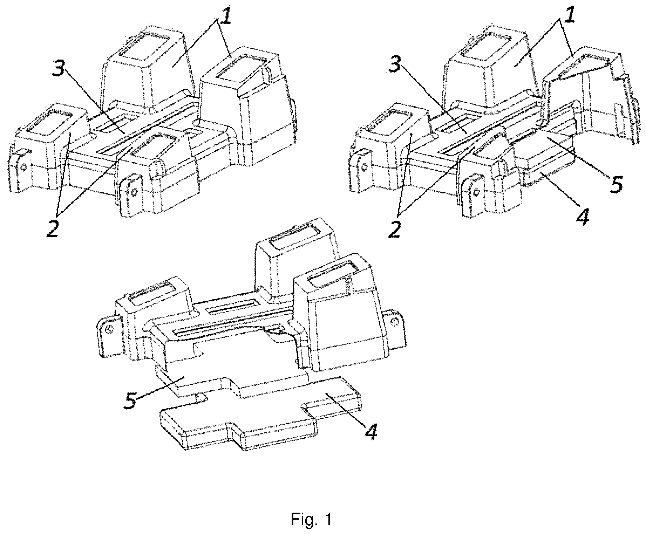

Fig. 1 - a general view of the floating module;
Fig. 2 - rectangular floating solar power plant with a double row of solar panels in a row;
Fig. 3 - rectangular floating solar power plant with a single row of solar panels in a row;
Fig. 4 - floating solar power plant with a complex configuration;
Fig.5 - floating solar power plant with a platform for placing equipment;

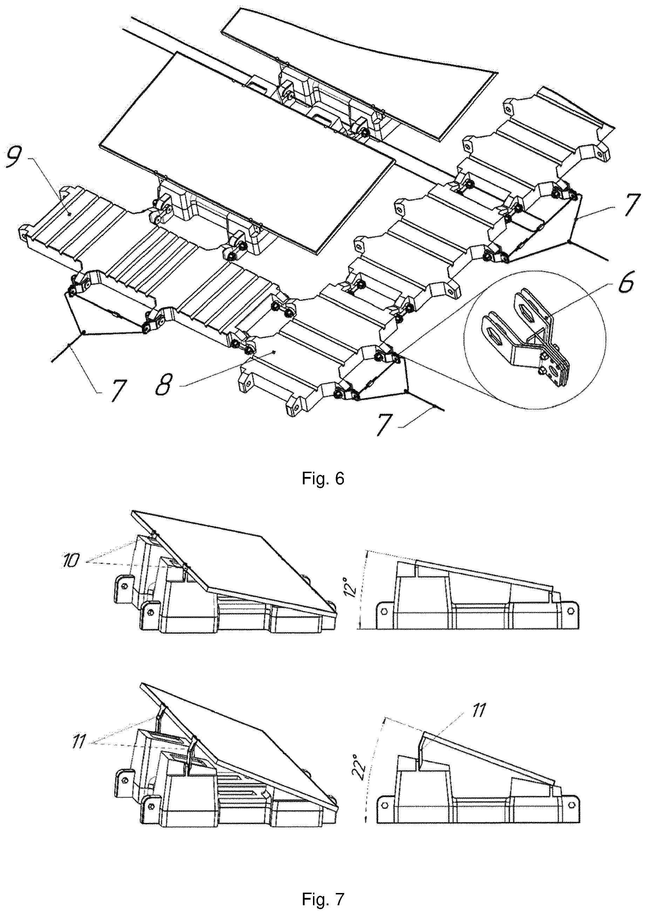

Fig. 6 - universal mounting of the floating module;
Fig. 7 - floating module with mounting elements of a photovoltaic panel with a different angle of inclination to the horizon;

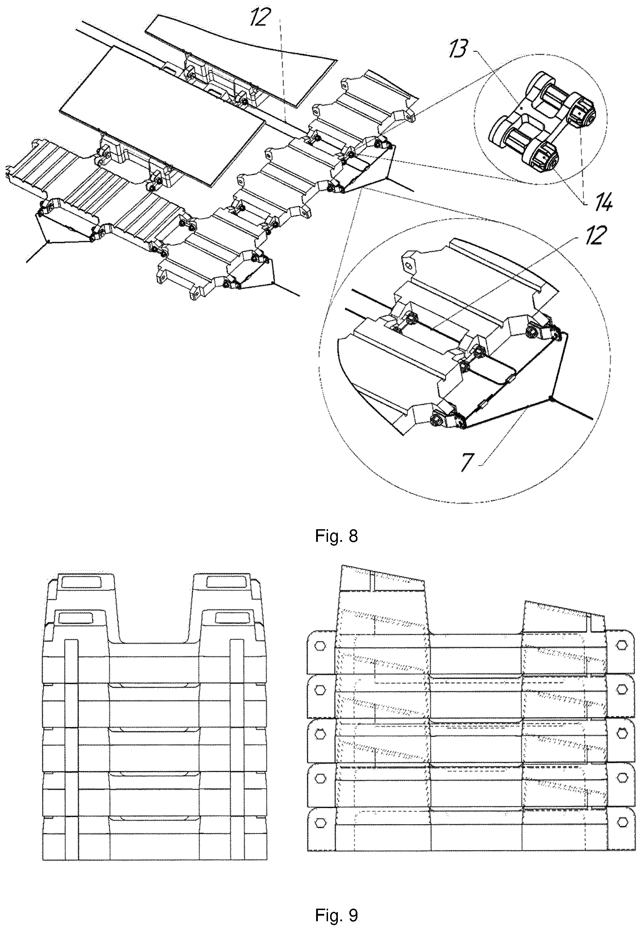

Fig. 8 - security system of the solar station;
Fig. 9 - example of stacking floating models during storage and transportation.

The following positions are indicated by numbers on the figures:
1 - *hollow support elements; 2* - *hollow support elements; 3* - *base floating module; 4* - *ballast tank; 5* - *foam insert of the ballast tank; 6* - *anchor bracket; 7* - *anchor line; 8* - *additional track; 9* - *maintenance track; 10* - *standard bracket; 11* - *enlarged bracket; 12* - *steel cable of the safety system; 13* - *rubber connector; 14* - *plastic screw.*

### Implementation of the invention

The floating module for the photovoltaic panel consists of the base 3 of the floating module, made in the form of an open rectangle with an open bottom. At the corners of the base in its upper part, there are four hollow support elements 1, 2 for mounting the photovoltaic panel.

Hollow support elements 1, 2 are installed at a distance from each other, providing ventilation space between them.

Ventilation space is necessary to ensure the possibility of cooling of the photovoltaic panel placed on the mentioned module. The lower the temperature of the photovoltaic panel, the higher its efficiency. Passive cooling of the photovoltaic panel is provided by air circulation in the gap between the photovoltaic panel and the floating module.

The hollow support elements are made to rise above the base 3 of the floating module, while one pair of support elements is made higher than the second pair of support elements. The implementation of support elements of different heights is necessary to create an optimal tilt to the horizon of the photovoltaic panel -12 degrees. This angle allows you to install solar power plants in a sufficiently large latitude range. However, when placing the station closer to the Earth's magnetic poles, this angle should be adjusted for a more optimal orientation of the photovoltaic panel to the sun, which will increase electricity generation.

The ability to adjust the angle of inclination of the photovoltaic panel is achieved by mounting brackets.

Depending on the installation location of the solar power plant and the optimal angle of inclination of the photovoltaic panel, a standard bracket 10 or an enlarged bracket 11 of a certain height is selected. The heights of the brackets are standardized and, depending on their height, provide the required angle of inclination of the photovoltaic panel. The enlarged brackets provide mounting of the photovoltaic panel with a pitch angle of 5 degrees. And have the following values of the angle of inclination of the photovoltaic panel to the horizon: 12 degrees, 17 degrees, 22 degrees, 27 degrees, 32 degrees.

The stability of the floating module is achieved by installing a ballast tank 4 and inserting a foam material 5 inside the floating module.

The ballast tank 4 is a hollow tank of complex shape with holes for filling it with water after lowering the floating module to the water surface. The ballast tank 4 is made of a complex shape, with the lower part of the ballast tank 4 is made in a shape that repeats the shape of the floating module in its upper part. The complex shape of the lower part of the ballast tank 4 makes it possible to transport the floating module assembly without impairing the stacking coefficient of the modules during transportation.

Insert 5 made of foamed material, made of foamed polystyrene, it is also possible to manufacture it from foamed polyethylene or polyurethane, with a density ranging from 20 to 35 kg /m³, which is much lower than the density of water. This allows her to have positive buoyancy.

The foam insert 5 is installed inside the floating module and is compressed by a ballast tank 4, which is attached to the walls of the floating module. Structurally, the lower side of the insert 5 is made of foamed material and, accordingly, the upper side of the ballast tank 4 is located along the water line of the floating module, which also ensures fast and unambiguous immersion of the floating module in water.

When installing the floating module on the water surface, due to the absence of the lower wall structure as such, water is collected inside the floating module and the ballast tank 4, which allows to make the structure heavier and increase its inertia, respectively, makes it more stable on the waves, increases its resistance to wind loads, which tend to pull the floating module out of the water.

The foam insert 5 fixes the level of lowering of the floating module into the water, does not allow water to completely fill the space of the floating module.

The absence of a lower wall in the design of the floating module as such provides increased stability of the floating module with photovoltaic panels when exposed to waves, increased resistance to wind loads, as well as reduced transportation costs due to stackability.

The floating module is designed to be connected to a similar module to form a system of floating modules that forms solar power plants of various configurations.

The modularity of the system is achieved by additional elements - service track 9 and additional track 8. The use of which will allow access to technical personnel, and also allows you to assemble solar power plants of various configurations. The service track 9 forms rows in the floating station, and the additional track 8 forms columns.

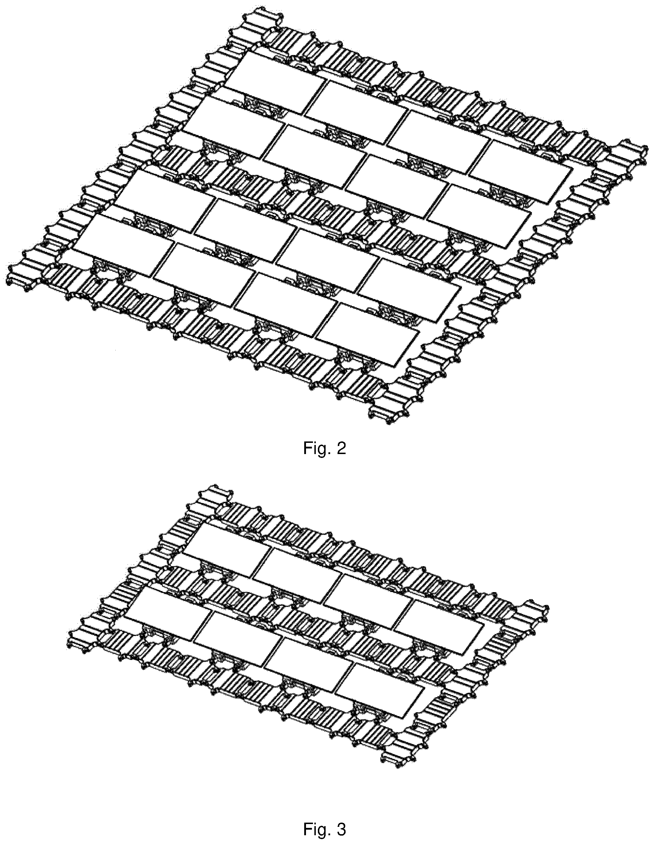

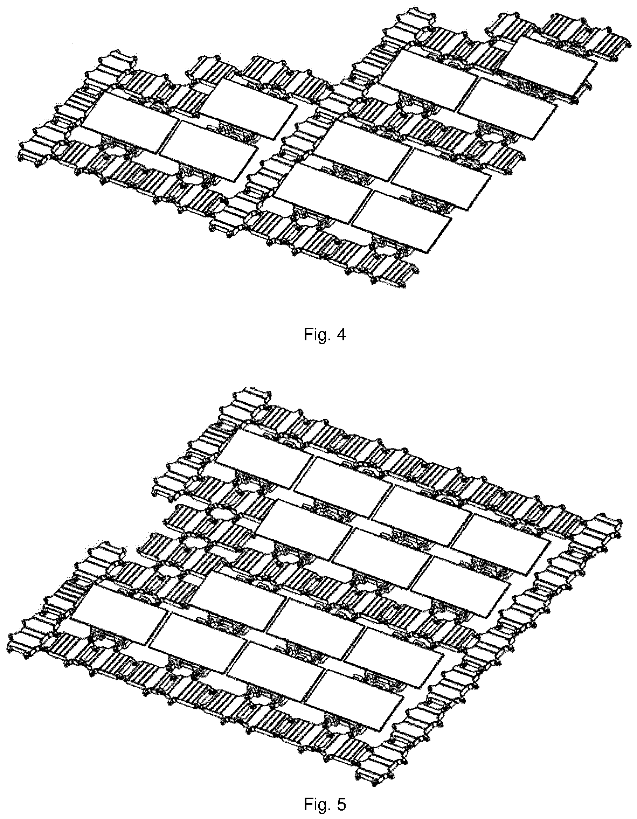

Examples of solar power plants of various configurations are shown in Fig. 2 -Fig. 5: Fig. 2 shows a rectangular floating solar power plant with a double row of solar panels in a row; Fig. 3 shows a rectangular floating a solar power plant with a single row of solar panels in a row; Fig. 4 shows a floating solar power plant with a complex configuration; Fig. 5 shows a floating solar power plant with a platform for placing equipment. It is also possible to combine the above combinations and other assembly options.

The elements of the system, namely: plastic screws 14 and rubber connectors 13 interconnect floating modules serving the tracks 9 and additional tracks 8. The rubber connector leaves a small degree of freedom between the elements of the system, which allows you to distribute and partially absorb loads from external influences on the system. Which significantly affects the stability of the system.

Rubber connectors 13 are made in the form of quick-release hinged joints. Structural elements of the connection are located on all ends of the tracks and on the sidewalls of the floating module. Rubber connectors by means of screws 14 are fixed with the possibility of rotation around the axis of the screw 14 in the structural elements of the connection. This connection provides quick disconnection and connection if necessary.

However, in existing floating solar power plants, it is possible to destroy the entire station if only one fastening element fails. A failed element causes a chain reaction, which stops only when the external influence is removed (storm wind, etc.) since individually the elements of the system cannot resist external influences, which can lead to the complete destruction of a floating solar power plant.

Protection against destruction of a floating solar power plant can be provided by the design of plastic screws 14, which, in addition to the main function (connecting system elements together), allow them to be used to protect a solar power plant from destruction.

A hole is made inside each of the screws, when connecting the system elements in a row, the holes in the screws are opposite each other, a steel cable 12 is threaded through the holes, for the entire width of the station, the ends of the steel cable are rigidly connected to the anchor lines 7. When the fastening element fails, the chain reaction reaches the elements connected by the cable and stops, preventing the destruction of the floating solar power plant.

The location of the cables (rows or columns) and the frequency of their location can be completely different and is selected from the installation location of a floating solar power plant and the safety requirements of a floating solar power plant.

Reliable and universal fastening of the floating module is achieved by the following design of the mounting brackets 6.

The mounting bracket 6 is attached to the existing mounting elements of the system located on the tracks or floating module through a screw 14, which allows to evenly distribute the load from the anchor line, as well as to place attachment points around the perimeter of the floating solar power plant. The anchor line 7 can be attached to one or more fasteners on a service track 9, an additional track 8 or a floating module, depending on the expected loads from external influences on a floating solar power plant. Attaching anchor lines to several attachment points allows you to evenly distribute the loads experienced by the system from external influences. This makes it possible to protect the floating station from destruction by localizing the possible destruction of the floating station when exposed to extreme external influences.

The mentioned tracks are made with an internal cavity providing positive buoyancy and are made in the form of a single structural element.

In the embodiment of the claimed invention, the upper surface of the tracks is made with stiffening ribs. The stiffeners on the upper surface of the tracks are necessary to avoid deflection and destruction of the tracks during maintenance by employees of the floating power plant.

Floating modules with photovoltaic panels installed on them are connected to each other to form a system of floating modules. Photovoltaic panels are equipped with a connector for connecting photovoltaic panels to each other. Photovoltaic panels are connected to a single solar power plant by means of electrical cables. At the same time, floating modules provide positive buoyancy of the formed power plant.

This floating power plant is made with the possibility of being based on water and generating electricity by photovoltaic panels placed on floating modules. The number of floating modules with photovoltaic panels of one power plant depends on the required design capacity.

One floating module contains one photovoltaic panel, with a power of, for example, 280-550 watts. The power of photovoltaic panels can be different.

The design of the floating module ensures the stability of the power plant due to the water ballast system, flexible connecting elements and anchor lines.

A photovoltaic panel placed on a floating module has a more efficient power generation, since the station is located on water, which already increases the efficiency of electricity generation compared to being based on land (about 10-13%), and due to the gap under the panel, additional cooling of the photovoltaic panel is carried out in comparison with those known from the state of the art for floating modules.

The design of the floating module makes it possible to transport these floating modules by folding them on top of each other, which significantly saves space.

The device works as follows:
A floating module with a photovoltaic panel installed on it is placed on the water, a valve on the floating module opens, a load is applied that allows the floating module to be lowered to a predetermined depth, and the module is immersed in water to the required depth, the height control valve closes, and the water remains inside the module, which gives weight and stability to the entire system. The individual elements of the station are assembled together - forming a floating solar station of the required configuration and required power. The floating station is located on the water; electrical cables from it are brought ashore, where they are connected to the electricity consumption system.

## Claims

1. - A floating module for photovoltaic panels, containing a hollow base, hollow support elements located on the base to form a single internal cavity with the base, a photovoltaic panel located on the support elements at an angle to the horizon, at the same time, a hollow ballast tank is installed in the internal cavity of the base, made with holes for filling with water, and an insert made of foam is installed on top of the tank in the internal cavity of the base, moreover, the lower side of the foam material insert and, accordingly, the upper side of the ballast tank is located along the water line of the floating module.

2. - The module according to claim 1, **characterized in that** the foam insert is made of a density of 20 to 35 kg/m³.

3. - The module according to claim 1, **characterized in that** the insert is made of foamed material is made of expanded polystyrene or of expanded polyethylene or polyurethane.

4. - The module according to claim 1, **characterized in that** the ballast tank is made of a complex shape that repeats the internal shape of the base of the floating module, while the lower part of the ballast tank is made in a shape that repeats the shape of the floating module in its upper part.

5. - The module according to claim 1, **characterized in that** the photovoltaic panel is located at an angle of 12 or 17 or 22 or 27 or 32 degrees to the horizon.

6. - The module according to claim 1, **characterized in that** the hollow support elements are located on the base with the provision of ventilation space between themselves and with the provision of a ventilation gap between the upper wall of the base and the back side of the photovoltaic panel.

7. - The module according to claim 1, **characterized in that** the module is designed to be connected to at least one similar module to form a system of floating modules, with photovoltaic panels located on each floating module connected by electric cables to the power plant, while the power plant contains service and additional tracks connected to the said at least one module.

8. - The module according to claim 7, **characterized in that** the connection of the mentioned tracks with each other or the connection of the mentioned tracks with at least one module and /or the connection of the modules to each other is made by means of hinged joints fixed with a screw, with the possibility of rotating the hinge joint around the axis of the screw on the structural fastening element made on the side walls of the module and the mentioned tracks.

9. - The module according to claim 8, **characterized in that** a through hole is made in each screw along the central axis, while a steel cable is laid through the hole, connecting the mentioned tracks and modules, while the ends of the cable are rigidly connected to the anchor lines.

10. - The module according to claim 7, **characterized in that** the upper surface of the tracks is made with stiffeners.

11. - The module according to claim 7, **characterized in that** the tracks are made with a grooved upper surface.

12. - The module according to claim 1, **characterized in that** the floating module is made of recycled secondary raw materials or is made from a mixture of primary and secondary raw materials or from primary raw materials, while the raw materials are polyethylene terephthalate, low-pressure polyethylene, high-pressure polyethylene, polypropylene.

13. - The module according to claim 7, **characterized in that** the tracks are made of recycled secondary raw materials or made from a mixture of primary and secondary raw materials, or from primary raw materials, while the raw materials are polyethylene terephthalate, low-pressure polyethylene, high-pressure polyethylene, polypropylene.
